# EUROPÄISCHE PATENTSCHRIFT

(11) **EP 1 210 376 B1**
(45) Veröffentlichungstag und Bekanntmachung des Hinweises auf die Patenterteilung: **29.12.2004**
(21) Anmeldenummer: 00965918.6
(22) Anmeldetag: 05.09.2000
(51) Int. Cl.: C08F 4/24, C01B 33/193

(54) **OPTIMIERTES VERFAHREN ZUR HERSTELLUNG VON KATALYSATORTRÄGERN AUF DER BASIS VON KIESELGEL SOWIE VON KIESELGEL-GETRÄGERTEN CHROMKATALYSATOREN**
OPTIMIZED METHOD FOR THE PRODUCTION OF CATALYST SUPPORTS BASED ON SILICA GEL AND CHROMIUM CATALYSTS SUPPORTED ON SILICA GEL
PROCEDE OPTIMISE POUR PRODUIRE DES SUPPORTS DE CATALYSEURS A BASE DE GEL DE SILICE ET DES CATALYSEURS DE CHROME A SUPPORT GEL DE SILICE

(30) Priorität: 09.09.1999 DE 19943166
(43) Veröffentlichungstag der Anmeldung: 05.06.2002
(73) Patentinhaber: Basell Polyolefine GmbH, 50389 Wesseling (DE)
(72) Erfinder: DE LANGE, Paulus, 50389 Wesseling (DE); FUNK, Guido, 67549 Worms (DE); DECKERS, Andreas, 55234 Flomborn (DE); KÖLLE, Peter, 67098 Bad Dürkheim (DE)
(86) Internationale Anmeldenummer: PCT/EP2000/008636
(87) Internationale Veröffentlichungsnummer: WO 2001/018069

(56) Entgegenhaltungen:
- DE-A- 2 540 279
- DE-A- 4 231 749

## Beschreibung

Die Erfindung betrifft ein Verfahren zur Herstellung von Kieselgcl-Katalysatorträgern und Kieselgel-geträgerten Chromoxid-Katalysatoren zur Polymerisation von Olefin-Monomeren.

Polymerisationskatalysatoren, die Kieselgel oder modifiziertes Kieselgel als Trägermaterial und Chrom als aktive Komponente enthalten, spielen eine wesentliche Rolle für die Herstellung von High-Density-Polyethylen (HD-PE). Die Bedingungen bei der Herstellung der Träger und der Katalysatoren bestimmen die chemische Zusammensetzung, Porenstruktur, Teilchengröße und Form der Katalysatoren. Vor der Polymerisation werden die Katalysatoren bei hohen Temperaturen aktiviert, um Chrom auf der Katalysatoroberfläche als Cr(VI)-Spezies zu stabilisieren. Diese Spezies wird durch Zugabe von Ethen oder von zusätzlichen Reduktionsmitteln reduziert, um die katalytisch aktive Spezies auszubilden, die die Polymerisation katalysiert. Die Zusammensetzung des Katalysatorträgers sowie des Katalysators, seine Struktur und die Aktivierungsbedingungen haben einen entscheidenden Einfluß auf die Leistung des Katalysators im Polymerisationsverfahren, die Aktivität des Katalysators, die Struktur und die Eigenschaften des entstehenden Polymers.

DE-A 25 40 279 betrifft ein Verfahren zur Herstellung eines Katalysators zur Polymerisation ungesättigter Verbindungen, der geeignet ist, leicht verarbeitbare Olefinpolymerisate mit niedriger Schmelzviskosität herzustellen, ohne Einsatz großer Mengen Wasserstoff als Molekulargewichtsregler. In diesem Verfahren wird zunächst ein feinteiliges Kieselsäure-Xerogel hergestellt, ausgehend von einem 10 bis 25 Gew.-% Feststoff (berechnet als SiO₂) enthaltenden Kieselsäure-Hydrogels, Extrahieren des Wassers aus dem Hydrogel, Trocknung (Xerogel-Bildung), Mahlen und Sieben des Xerogels. Anschließend wird das Xerogel mit Chromoxid oder einer in Chromoxid übergehenden Chromverbindung beladen und aktiviert. Dabei geht man von einem kugelförmigen Kieselsäure-Hydrogel aus, das einen Teilchendurchmesser von 1 bis 8 mm aufweist.

EP-A 0 263 525, DE-A 36 40 802 und DE-A 36 40 803 betreffen Weiterbildungen des in DE-A 25 40 279 offenbarten Verfahrens zur Herstellung eines Katalysators für die Polymerisation ungesättigter Verbindungen.

So wird in EP-A 0 263 525 ein Verfahren zur Herstellung von Polyethylen und Copolymeren des Ethens mit dem gemäß DE-A 25 40 279 hergestellten Katalysator und einem Alkyllithium als Cokatalysator beschrieben. Das Alkyllithium dient dabei dazu, die Produktivität des Katalysators zu erhöhen, die Induktionszeit der Polymerisation und die Empfindlichkeit des Katalysators gegenüber Verunreinigungen zu verringern sowie Polymerisate mit günstigen morphologischen Eigenschaften bereitzustellen.

DE-A 36 40 802 betrifft ein Verfahren zur Herstellung von grießförmigen Ethen-Homopolymerisaten und Ethen-Copolymerisaten, in dem ein Katalysator auf der Grundlage des Verfahrens der DE-A 25 40 279 hergestellt wird, der eine enge Korngrößenverteilung aufweist, so dass Polymerisate mit einer steuerbaren, optimalen Kornmorphologie hergestellt werden können. Gemäß DE-A 36 40 803 wird dieser Katalysator zusammen mit einem Lithiumalkyl als Cokatalysator eingesetzt.

Von entscheidender Bedeutung für das Porenvolumen des Katalysatorträgers, der gemäß dem in DE-A 25 40 279 offenbarten Verfahren hergestellt wird, ist die Extraktion des Wassers aus dem eingesetzten Hydrogel. Diese wird mit einem organischen Lösungsmittel durchgeführt und dauert im allgemeinen ca. 12 Stunden. Somit ist die Extraktion der kapazitätsbestimmende Schritt in dem Verfahren gemäß DE-A 25 40 279.

Aufgabe der vorliegenden Erfindung ist eine Weiterentwicklung des Verfahrens gemäß DE-A 25 40 279 zur Herstellung eines Katalysatorträgers auf der Basis von Kieselgel sowie eines Kieselgel-geträgerten Chromoxidkatalysators. Dabei soll das Verfahren insbesondere zeitlich effizienter durchgeführt werden als die bekannten Verfahren, durch eine Verkürzung der Extraktionszeit, wobei der Katalysator seine hervorragenden Eigenschaften beibehalten soll.

Diese Aufgabe wird durch ein Verfahren zur Herstellung eines Katalysatorträgers gelöst, umfassend:
a) Herstellung eines 10 bis 25 Gew.-% Feststoff (berechnet als SiO₂) enthaltenden Kieselsäure-Hydrogels, dessen Partikel weitgehend kugelförmig sind, durch
   a1) Einbringen einer Natrium- bzw. Kalium-Wasserglaslösung in einen unter Drall stehenden Strom einer Mineralsäure, sowohl längs als auch tangential zum Strom,
   a2) tropfenförmiges Versprühen des dabei entstehenden Kieselsäure-Hydrosols in ein gasförmiges Medium,
   a3) Erstarrenlassen des Hydrosols in dem gasförmigen Medium zu Hydrogel-Teilchen,
   a4) Waschen der so erhaltenen, weitgehend kugelförmigen Hydrogel-Teilchen zum Befreien des Hydrogels von Salzen,
b) Extraktion der Hydrogel-Teilchen mit einem Alkohol bis mindestens 60 % des im Hydrogel enthaltenen Wassers entfernt sind,
c) Trocknung des erhaltenen Hydrogels, bis bei Temperaturen von ≥ 160°C bei Normaldruck unter Verwendung eines inerten Schleppgases der Restalkoholgehalt unter 10 Gew.-% liegt (Xerogel-Bildung),
d) Einstellen der gewünschten Teilchengröße des erhaltenen Xerogels.

Das erfindungsgemäße Verfahren ist dadurch gekennzeichnet, dass die Hydrogel-Teilchen vor der Extraktion eine Teilchengröße im Bereich von 10 bis 15 mm aufweisen.

Die Extraktion des Wassers mit einem Alkohol erfolgt wesentlich schneller, wenn die Hydrogel-Teilchen einen Durchmesser im Bereich von 10 bis 15 mm, bevorzugt von 10 bis 12 mm aufweisen. Gleichzeitig stellt man als Folgeeffekt einen um ca. 20 % reduzierten Alkoholverbrauch, verglichen mit bekannten Verfahren, fest. Somit wird die Wirtschaftlichkeit des Verfahrens erhöht.

Die Extraktion erfolgt im allgemeinen in einem Zeitraum von 1 bis 10 Stunden, bevorzugt von 4 bis 8 Stunden, besonders bevorzugt von 2 bis 6 Stunden. Somit kann die Gesamtdauer des Herstellungsverfahrens gegenüber bekannten Verfahren erheblich verkürzt werden.

### Stufe a)

Charakteristisch für die Stufe a) des erfindungsgemäßen Verfahrens ist der Einsatz eines weitgehend kugelförmigen Kieselsäure-Hydrogels mit einem relativ hohen Feststoffgehalt im Bereich von 10 bis 25 Gew.-%, bevorzugt von 12 bis 20 Gew.-%, besonders bevorzugt von 14 bis 20 Gew.-% (berechnet als SiO₂). Das Herstellverfahren dieses Kieselsäure-Hydrogels erfolgt durch die Stufen a1) bis a4), die in DE-A 25 40 279 und der darin zitierten Literatur im Einzelnen beschrieben sind.

Nach Einbringen einer Natrium- bzw. Kalium-Wasserglaslösung in einen unter Drall stehenden Strom einer Mineralsäure, z.B. Schwefelsäure, Stufe a1), wird das entstehende Kieselsäure-Hydrosol in ein gasförmiges Medium mittels einer Düse versprüht, Stufe a2). Das dabei eingesetzte Düsenmundstück führt dabei nach Erstarrenlassen des Hydrosols in dem gasförmigen Medium, Stufe a3), zu Hydrogel-Teilchen mit einer Teilchengrößenverteilung, bei der im allgemeinen 90 bis 99 Gew.-%, bevorzugt 95 bis 98 Gew.-%, der Teilchen einen Teilchendurchmesser im Bereich von 8 bis 15 mm aufweisen. Nach Waschen der Hydrogel-Teilchen, Stufe a4), bevorzugt mit ca. 50°C warmem, schwach ammoniakalischem Wasser in einem kontinuierlich verlaufenden Gegenstromprozeß, werden die kugelförmigen Teilchen gesiebt. Dabei werden Hydrogel-Teilchen mit einem Durchmesser von ≥ 8 mm, bevorzugt im Bereich von 10 bis 15 mm, besonders bevorzugt von 10 bis 12 mm, isoliert und in ein Extraktionsgefäß überfuhrt.

### Stufe b)

Die Extraktion des Wassers aus dem Kieselsäure-Hydrogel mittels eines Alkohols kann in üblichen Extraktionsvorrichtungen, beispielsweise einem Säulenextraktor im Gleich- oder Gegenstrom, erfolgen.

Als Alkohole sind bevorzugt C₁- bis C₄-Alkohole wie tert.-Butanol, i-Propanol, Ethanol und Methanol geeignet. Dabei kann auch ein Gemisch verschiedener Alkohole eingesetzt werden. Ganz besonders bevorzugt wird Methanol eingesetzt.

Der eingesetzte Alkohol sollte vor der Extraktion weniger als 5 Gew.-%, bevorzugt weniger als 3 Gew.-%, Wasser enthalten.

In einer bevorzugten Ausführungsform werden die Kieselsäure-Hydrogelteilchen zur Extraktion des Wassers in ein Extraktionsgefäß überführt, und es wird so viel Alkohol zugegeben, bis die Hydrogel-Teilchen mit dem Alkohol bedeckt sind. Anschließend lässt man den Alkohol ablaufen und füllt erneut mit frischem Alkohol auf. Dieser Vorgang wird so lange wiederholt, bis mindestens 60 % des im Hydrogel enthaltenen Wassers entfernt sind.

### Stufe c) und Stufe d)

Das nach der Extraktion erhaltene Hydrogel wird in einer üblichen Trockenvorrichtung im allgemeinen bei Temperaturen von ≥ 160°C, bevorzugt im Bereich von 165 bis 190°C, besonders bevorzugt bei ca. 180°C, und einem Druck im Bereich von 600 bis 1060 mbar, bevorzugt von 900 bis 1060 mbar, besonders bevorzugt bei etwa Normaldruck, getrocknet, wobei ein inertes Schleppgas, bevorzugt Stickstoff, verwendet wird. Dabei wird so lange getrocknet, bis der Gewichtsverlust, gemessen mit Thermogravimetrie, bei 160°C < 10 Gew.-%, bevorzugt < 5 Gew.-% beträgt (Xerogel-Bildung).

Anschließend wird die gewünschte Teilchengröße des Xerogels, z.B. durch Vermahlen in einer Stiftmühle oder Pralltellermühle und anschließendes Sieben, auf einen Durchmesser von im Bereich von 1 bis 700 µm, bevorzugt von 1 bis 250 µm, eingestellt.

Die nach dem erfindungsgemäßen Verfahren hergestellten Xerogel-Teilchen dienen als Katalysatorträger für Chromoxid-Katalysatoren zur Polymerisation ungesättigter Verbindungen.

Die Herstellung der Chromoxid-Katalysatoren erfolgt vorzugsweise durch Beladen des erfindungsgemäßen Katalysatorträgers mit einer Chromverbindung, indem
e) das erfindungsgemäß erhaltene Xerogel mittels einer 0,05 bis 15 gew.-%-igen Lösung einer Chromverbindung, die unter den Reaktionsbedingungen der Stufe f) in eine Chrom(VI)-Verbindung übergeht, in einem Alkohol, der maximal 20 Gew.-% Wasser enthält, durch Verdampfen des Alkohols mit der gewünschten Menge Chrom beladen wird, und
f) das resultierende Produkt in einem wasserfreien Gasstrom, der mindestens 10 Vol.-% Sauerstoff enthält, auf Temperaturen im Bereich von 300 bis 1100°C über einen Zeitraum von 10 bis 1000 min erhitzt wird.

Stufe e) und Stufe f) erfolgen dabei wie in DE-A 25 40 279 beschrieben.

### Stufe e)

Als Alkohol wird in Stufe e) dabei vorzugsweise ein C₁- bis C₄-Alkohol, besonders bevorzugt Methanol, eingesetzt. Geeignete Chromverbindungen sind beispielsweise Chromtrioxid sowie lösliche Salze des dreiwertigen Chroms mit einer organischen oder anorganischen Säure wie Acetat, Oxalat, Sulfat oder Nitrat. Besonders bevorzugt werden Salze von solchen Säuren eingesetzt, die beim Aktivieren rückstandsfrei in Chrom(VI) übergehen, wie Chrom(III)nitratnona-hydrat.

Das Xerogel wird mit dem Alkohol durchmischt, beispielsweise in einem Doppelkonusmischer, und der Alkohol und gegebenenfalls Wasser werden bei Temperaturen im Bereich von 20 bis 150°C, bevorzugt von 130 bis 150°C, und Drücken im Bereich von 10 mbar bis 1 bar, bevorzugt von 300 bis 900 mbar, abdestilliert.

### Stufe f)

Die Aktivierung des Katalysators (Stufe f)) erfolgt vorzugsweise bei Temperaturen im Bereich von 300 bis 1100°C, besonders bevorzugt von 500 bis 800°C, über einen Zeitraum von bevorzugt 60 bis 1000 min, besonders bevorzugt von 200 bis 800 min, beispielsweise in einem von Luft durchströmten Wirbelbett.

Mittels des erfindungsgemäßen Verfahrens ist ein Katalysator erhältlich, mit einem Chromgehalt im Bereich von 0,1 bis 2 Gew.-%, bevorzugt von 0,7 bis 1,5 Gew.-%, besonders bevorzugt von 0,9 Gew.-% bis 1,2 Gew.-%, bezogen auf die Gesamtmasse des Katalysators. Dieser Katalysator ist zur Homo- und Copolymensation ungesättigter Verbindungen geeignet. Bevorzugt werden als ungesättigte Verbindungen Ethen oder C₃- bis C₈-α-Monoolefine eingesetzt.

Die Polymerisation kann in üblicher Weise erfolgen, wobei eine Polymerisation in Suspension oder in der Gasphase bevorzugt ist.

Die nachfolgenden Beispiele erläutern die Erfindung zusätzlich.

### Beispiel 1 (erfindungsgemäß)

### Herstellung des Trägerstoffs (Xerogel)

Es wurde eine in der Figur der US 3,872,217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stimseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser etwa gleich 10:1. Für die sich anschließende sekundäre Mischzone lag dieses Verhältnis bei etwa 15:1. Als Spritzmundstück wurde ein Rohrstück definierten Durchmessers über das Austrittsende des Kunststoffschlauches geschoben.

Beschickt wurde diese Mischvorrichtung mit 325 1/h 33 gew.-%-iger Schwefelsäure von 20°C mit einem Betriebsdruck von ca. 3 bar sowie 1100 1/h Wasserglaslösung (hergestellt aus technischem Wasserglas mit 27 Gew.-% SiO₂ und 8 Gew.-% Na₂O durch Verdünnung mit Wasser) mit einem Litergewicht von 1,20 kg/l und einer Temperatur von ebenfalls 20°C mit einem Druck von ebenfalls ca. 3 bar. In der mit dem Kunststoffschlauch ausgekleideten Mischkammer wurde durch fortschreitende Neutralisation ein unbeständiges Hydrosol mit einem pH-Wert zwischen 7 und 8 gebildet, das bis zur vollständigen Homogenisierung noch etwa 0,1 Sekunden in der Nachmischzone verblieb, bevor es durch das Düsenmundstück als flächenförmiger Flüssigkeitsstrahl in die Atmosphäre gespritzt wurde. Der Strahl zerteilte sich während des Fluges durch die Luft in einzelne Tropfen, die infolge der Oberflächenspannung in eine weitgehend kugelige Form übergingen und die noch während ihres Fluges innerhalb ca. einer Sekunde zu Hydrogel-Kugeln erstarrten. Der Durchmesser des Düsenmundstücks wurde so eingestellt, dass Kugeln mit der folgenden Kornverteilung erhalten wurden:

| | |
|---|---|
| < 8mm | 0,8 Gew.-% |
| 8 - 10 mm | 32,7 Gew.-% |
| 10 - 12 mm | 38,2 Gew.-% |
| 12 - 15 mm | 26,6 Gew.-% |
| > 15 mm | 1,7 Gew.-% |

Die Kugeln hatten eine glatte Oberfläche, waren klar und enthielten 17 Gew.-% SiO₂.

Durch Sieben isolierte man die Kugeln, die einen Durchmesser im Bereich von 10 bis 15 mm hatten und füllte 420 kg dieser Kugeln in ein Extraktionsgefäß. Man ließ so lange Methanol zulaufen, bis die Kugeln mit Flüssigkeit bedeckt waren. Danach ließ man die Flüssigkeit ablaufen und füllte erneut mit Methanol auf. Diesen Vorgang wiederholte man so lange, bis die Dichte des ablaufenden Methanol-Wassergemisches ≤ 0,805 g/ml (bei 20°C) war. Die Extraktionsdauer betrug 5 Stunden und es wurden 1960 1 Methanol verbraucht.

Das dabei erhaltene Material wurde bei 180°C und Normaldruck unter Verwendung von 200°C heißem Stickstoff als Schleppgas so lange getrocknet, bis der Gewichtsverlust, festgestellt mit Thermogravimetrie, bei 160°C kleiner 10 % beträgt.

Anschließend wurde das getrocknete Xerogel mit einer Stiftmühle vermahlen und durch Sieben die Xerogel-Trägerteilchen isoliert, die einen Durchmesser von 1 bis 250 µm aufwiesen.

### Herstellung des Katalysators

10 kg des beschriebenen Xerogelträgers wurden mit 17 1 einer 5,4 gew.-%-igen Lösung von Chrom(III)nitrat-nona-hydrat mit Methanol in einen Doppelkonusmischer gefüllt. Unter Rotation des von außen mit Dampf auf 130°C beheizten Mischers wurde dann im Vakuum das Methanol abdestilliert.

Der so gewonnene Katalysator hatte einen analytisch ermittelten Gehalt von 1 Gew.-% Cr.

### Beispiel 2 (Vergleichsbeispiel)

Zur Herstellung des Trägerstoffs wird wie in Beispiel 1 verfahren. Durch Veränderung des Durchmessers des Düsenmundstücks werden Hydrogel-Kugeln mit folgender Komverteilung erhalten:

| | |
|---|---|
| > 8 mm | 10 Gew.-% |
| 6 - 8 mm | 45 Gew.-% |
| 4 - 6 mm | 34 Gew.-% |
| < 4 mm | 11 Gew.-% |

Durch Sieben isolierte man die Kugeln, die einen Durchmesser im Bereich von 2 bis 6 mm hatten und füllte 420 kg dieser Kugeln in ein Extraktionsgefäß. Man ließ so lange Methanol zulaufen, bis die Kugeln mit Flüssigkeit bedeckt waren. Danach ließ man die Flüssigkeit ablaufen und füllte erneut mit Methanol auf. Diesen Vorgang wiederholte man so lange, bis die Dichte des ablaufenden Methanol-Wassergemisches ≤ 0,805 g/ml (bei 20°C) war. Die Extraktionsdauer betrug 12 Stunden und es wurden 2700 1 Methanol verbraucht.

## Patentansprüche

1. Verfahren zur Herstellung eines Katalysatorträgers, umfassend:
a) Herstellung eines 10 bis 25 Gew.-% Feststoff (berechnet als SiO₂) enthaltenden Kieselsäure-Hydrogels, dessen Partikel weitgehend kugelförmig sind, durch
a1) Einbringen einer Natrium- bzw. Kalium-Wasserglaslösung in einen unter Drall stehenden Strom einer Mineralsäure, sowohl längs als auch tangential zum Strom,
a2) tropfenförmiges Versprühen des dabei entstehenden Kieselsäure-Hydrosols in ein gasförmiges Medium,
a3) Erstarrenlassen des Hydrosols in dem gasförmigen Medium zu Hydrogel-Teilchen,
a4) Waschen der so erhaltenen, weitgehend kugelförmigen Hydrogel-Teilchen zum Befreien des Hydrogels von Salzen,
b) Extraktion der Hydrogel-Teilchen mit einem Alkohol, bis mindestens 60 % des im Hydrogel enthaltenen Wassers entfernt sind,
c) Trocknung des erhaltenen Hydrogels, bis bei Temperaturen von ≥ 160°C bei Normaldruck unter Verwendung eines inerten Schleppgases der Restalkoholgehalt unter 10 Gew.-% liegt (Xerogel-Bildung)
d) Einstellen der gewünschten Teilchengröße des erhaltenen Xerogels,
**dadurch gekennzeichnet, dass** die Hydrogel-Teilchen vor der Extraktion eine Teilchengröße im Bereich von 10 bis 15 mm aufweisen.

2. Verfahren nach Anspruch 1, **dadurch gekennzeichnet, dass** die Extraktionsdauer in Stufe b) 4 bis 8 Stunden beträgt.

3. Verfahren nach einem der Ansprüche 1 oder 2, **dadurch gekennzeichnet, dass** ein C₁- bis C₄-Alkohol als Extraktionsmittel eingesetzt wird.

4. Verfahren nach Anspruch 3, **dadurch gekennzeichnet, dass** Methanol eingesetzt wird.

## Claims

1. Method for the production of a catalyst support comprising the following steps:
a) production of a silica hydrogel having a solids content of from 10 to 25% by weight (calculated as SiO₂) whose particles are substantially spherical, by
a1) introduction of a sodium water-glass or potassium water-glass solution into a swirling stream of a mineral acid, both longitudinally and tangentially to the stream,
a2) spraying of the resultant silica hydrosol in drop form into a gaseous medium,
a3) allowing the hydrosol to solidify in the gaseous medium to give hydrogel particles,
a4) washing of the resultant substantially spherical hydrogel particles in order to free the hydrogel from salts,
b) extraction of the hydrogel particles with an alcohol until at least 60% of the water present in the hydrogel has been removed,
c) drying of the resultant hydrogel until the residual alcohol content is less than 10% by weight (xerogel formation) at temperatures of ≥ 160°C at atmospheric pressure using an inert entraining gas,
d) setting of the desired particle size of the resultant xerogel,
**characterized in that** the hydrogel particles have a particle size in the range from 10 to 15 mm before the extraction.

2. Method according to Claim 1, **characterized in that** the extraction duration in step b) is from 4 to 8 hours.

3. Method according to either of Claims 1 and 2, **characterized in that** a C₁- to C₄-alcohol is employed as extractant.

4. Method according to Claim 3, **characterized in that** methanol is employed.

## Revendications

1. Procédé de fabrication d'un support de catalyseur comprenant les étapes consistant à :
a) produire un hydrogel d'acide silicique, contenant 10% à 25% en poids de matières solides (exprimées en SiO₂), dont les particules sont en grande partie sphériques,
a1) en plaçant une solution de verre soluble sodique ou potassique dans un courant tourbillonnant d'un acide minéral, aussi bien longitudinalement que tangentiellement par rapport au courant,
a2) en pulvérisant sous forme de gouttes l'hydrosol d'acide silicique en formation dans un milieu gazeux,
a3) en laissant l'hydrosol se solidifier dans le milieu gazeux pour former des particules d'hydrogel,
a4) en lavant les particules d'hydrogel en grande partie sphériques ainsi obtenues pour libérer l'hydrogel des sels,
b) extraire les particules d'hydrogel dans un alcool jusqu'à ce qu'au moins 60% de l'eau contenue dans l'hydrogel soient éliminés,
c) sécher l'hydrogel obtenu à des températures ≥ 160°C sous la pression normale en utilisant un gaz porteur inerte jusqu'à ce que la teneur en alcool résiduel se situe en dessous de 10% (formation d'un xérogel),
d) ajuster la granulométrie souhaitée du xérogel obtenu,
**caractérisé en ce que** les particules d'hydrogel présentent, avant l'extraction, une granulométrie allant de 10 mm à 15 mm.

2. Procédé selon la revendication 1, **caractérisé en ce que** la durée de l'extraction dans l'étape b) est de 4 heures à 8 heures.

3. Procédé selon l'une des revendications 1 et 2, **caractérisé en ce que** l'on met en oeuvre un alcool en C₁ à C₄ en tant qu'agent d'extraction.

4. Procédé selon la revendication 3, **caractérisé en ce que** l'on met en oeuvre du méthanol.
